# EUROPÄISCHE PATENTANMELDUNG

(11) **EP 3 498 922 A1**
(43) Veröffentlichungstag der Anmeldung: **19.06.2019**
(21) Anmeldenummer: 18210696.3
(22) Anmeldetag: 06.12.2018
(51) Int. Cl.: E02F 3/40, E02F 3/96, E02F 9/22, F16N 11/08

(54) **ANBAUGERÄT ZUM ANKUPPELN AN EINE BAUMASCHINE UND ZUR VERWENDUNG IM TIEFBAU**

(30) Priorität: 13.12.2017 DE 102017129731
(71) Anmelder: MTS Maschinentechnik Schrode AG, 72534 Hayingen (DE)
(72) Erfinder: SCHRODE, Rainer, 88529 Zwiefalten (DE); WERNER, Tobias, 72800 Eningen unter Achalm (DE)
(74) Vertreter: DREISS Patentanwälte PartG mbB

(57) **Zusammenfassung**

Ein Anbaugerät (10) zum Ankuppeln an eine Baumaschine und zur Verwendung im Tiefbau umfasst einen Antrieb (18), einen von dem Antrieb (18) antreibbaren Arbeitsabschnitt (20), und eine automatische Schmiereinrichtung (32) zum Schmieren des Antriebs (18) und/oder des Arbeitsabschnitts (20), wobei die automatische Schmiereinrichtung (32) einen Anschlussabschnitt (36) für den Anschluss einer Schmiermittelkartusche (38) umfasst. Es wird vorgeschlagen, dass das Anbaugerät (10) einen Vorratsbereich (40) aufweist, in dem mindestens eine Schmiermittelkartusche (42) bevorratbar ist.

## Beschreibung

Die Erfindung betrifft ein Anbaugerät zum Ankuppeln an eine Baumaschine und zur Verwendung im Tiefbau nach dem Oberbegriff des Anspruchs 1.

Vom Markt her sind beispielsweise sogenannte "Schaufelseparatoren" bzw. "Bodenrecycler" bekannt, beispielsweise solche des Anmelders, siehe www.mts-online/ produkte/bodenaufbereitung/schaufelseparatoren.html. Diese sind als Anbaugerät ausgebildet und können mittels eines hydraulischen Schnellwechslers an einen Baggerarm eines Baggers angekoppelt werden. Ein solcher Schaufelseparator weist als Arbeitsabschnitt eine Mehrzahl von parallel zueinander angeordneten und miteinander kämmenden Zerkleinerungswalzen oder Siebwalzen auf. Ein Bagger kann mit einem solchen Schaufelseparator genau gleich wie mit einer normalen Baggerschaufel Boden aufnehmen, der dann durch die Zerkleinerungswalzen zerkleinert und/oder gesiebt wird und auf diese Weise aufbereitet wieder aus dem Schaufelseparator austritt. Die Zerkleinerungswalzen sind an einem Gehäuse des Schaufelseparator mittels Lagereinrichtungen gelagert, die mittels einer automatischen Schmiereinrichtung geschmiert werden. Ganz allgemein ist das Grundprinzip eines solchen Schaufelseparators in der DE 198 52 583 A1 beschrieben.

Ferner offenbart die JP 04095884 B2 einen Traktor, bei dem in einem entsprechenden Raum eine Schmiermittelpistole und eine Halterung für eine Schmiermittelkartusche vorhanden sind.

Aufgabe der vorliegenden Erfindung ist es, den Betrieb von Anbaugeräten, die im Tiefbau eingesetzt werden, zu vereinfachen.

Diese Aufgabe wird durch ein Anbaugerät mit den Merkmalen des Anspruchs 1 gelöst. Vorteilhafte Weiterbildungen der Erfindung sind in Unteransprüchen genannt. Darüber hinaus finden sich für die Erfindung wesentliche Merkmale auch in der nachfolgenden Beschreibung und in der beigefügten Zeichnung, wobei diese Merkmale sowohl in Alleinstellung als auch in unterschiedlichen Kombinationen für die Erfindung wesentlich sein können, ohne dass hierauf nochmals explizit hingewiesen werden wird.

Erfindungsgemäß wird ein Anbaugerät zum Ankuppeln an eine Baumaschine und zur Verwendung im Tiefbau vorgeschlagen. Unter einer Baumaschine wird hierbei beispielsweise ein Bagger, ein Radlader, ein sonstiges Zugfahrzeug, etc. verstanden, wie sie vorwiegend im Tiefbau eingesetzt werden. Das Anbaugerät umfasst einen Antrieb, bei dem es sich üblicherweise um einen hydraulischen Antrieb handeln dürfte, der beispielsweise von der Baumaschine gespeist wird. Grundsätzlich denkbar ist jedoch auch jede andere Art von Antrieb, beispielsweise ein elektrischer Antrieb oder ein Antrieb durch eine an dem Anbaugerät vorhandene Brennkraftmaschine.

Zu dem Anbaugerät gehört ferner ein von dem Antrieb antreibbarer Arbeitsabschnitt, welcher die von dem Anbaugerät gewünschte Arbeit leistet. Beispielsweise kann der Arbeitsabschnitt zur Bearbeitung ganz allgemein von Material, insbesondere jedoch zur Bearbeitung eines Bodenmaterials dienen. Der Begriff der "Bearbeitung" soll hier bewusst breit im Sinne einer jeglichen durch den Arbeitsabschnitt hervorgerufenen Zustandsänderung eines Materials verstanden werden. Ferner umfasst das Anbaugerät eine automatische Schmiereinrichtung zum Schmieren des Antriebs und/oder des Arbeitsabschnitts. Diese automatische Schmiereinrichtung umfasst wiederum einen Anschlussabschnitt für den Anschluss einer Schmiermittelkartusche. Hierdurch wird der Tatsache Rechnung getragen, dass bei solchen Anbaugeräten der Verbrauch an Schmiermittel bisweilen relativ hoch ist, so dass durch einen Austausch der Schmiermittelkartusche einfache Art und Weise Schmiermittel bereitgestellt werden kann.

Erfindungsgemäß wird vorgeschlagen, dass das Anbaugerät einen Vorratsbereich aufweist, in dem mindestens eine Schmiermittelkartusche bevorratbar ist. Ein solcher Vorratsbereich kann im einfachsten Fall beispielsweise eine Ablagefläche oder ein Fach sein, welche so ausgebildet sind, dass durch sie eine Ersatz-Schmiermittelkartusche im normalen Betrieb des Anbaugeräts zuverlässig und unverrückbar sowie unverlierbar gehalten und insoweit bevorratet werden kann. Auch wird die besagte Ersatz-Schmiermittelkartusche in dem Vorratsbereich im Betrieb des Anbaugeräts durch die Bevorratung in dem erfindungsgemäß vorgesehenen Vorratsbereich vor Beschädigungen geschützt.

Wird von einem Benutzer des Anbaugeräts festgestellt, dass die an dem Anschlussabschnitt der automatischen Schmiereinrichtung aktuell angeschlossene Schmiermittelkartusche leer ist, kann dieser Benutzer einfach die aktuell angeschlossene leere Schmiermittelkartusche von dem Anschluss entfernen, und er kann aus dem im bzw. am Anbaugerät vorhandenen Vorratsbereich eine dort vorhandene volle Ersatz-Schmiermittelkartusche entnehmen und mit dem Anschluss der automatischen Schmiereinrichtung verbinden.

Der Benutzer muss daher nicht extra an eine entfernt gelegene Stelle der Baustelle gehen, an der normalerweise die auf einer Baustelle benötigten Verbrauchsmaterialien gelagert sind, sondern kann unmittelbar dort, wo das Verbrauchsmaterial benötigt wird, nämlich direkt am Anbaugerät, das Verbrauchsmaterial, nämlich das Schmiermittel, vorfinden. Hierdurch wird unnötige Zeit, die ansonsten durch ein Suchen des Verbrauchsmaterials an einer entfernten Stelle einer Baustelle verloren geht, gespart. Es wird auch die Lebensdauer des Anbaugeräts verbessert, da dem Benutzer das Austauschen der Schmiermittelkartusche erleichtert wird, wodurch er motiviert wird, die Schmiermittelkartusche sofort auszutauschen, wenn festgestellt wird, dass die aktuell verwendete Schmiermittelkartusche leer ist. Insgesamt wird durch die Erfindung die Verwendung des Anbaugeräts vereinfacht, Standzeiten werden reduziert, und die Lebensdauer wird verlängert.
In einer ersten Weiterbildung des erfindungsgemäßen Anbaugeräts wird vorgeschlagen, dass der Vorratsbereich unmittelbar benachbart zu einem Kupplungsabschnitt angeordnet ist, wobei der Kupplungsabschnitt zum Ankuppeln des Anbaugeräts an eine Baumaschine, insbesondere an einen Baggerarm eines Baggers, ausgebildet ist. Vor allem im Bereich eines solchen Kupplungsabschnitts ist ein übliches Anbaugerät oft besonders stabil ausgebildet, so dass dort die Schmiermittelkartusche besonders sicher und vor Beschädigungen geschützt bevorratet werden kann. Außerdem befindet sich dieser Bereich bei auf dem Boden stehendem Anbaugerät meist in einer gewissen Höhe über dem Boden, so dass er für einen Benutzer sehr gut zugänglich ist.

Dazuhin ist es vorteilhaft, dass der Vorratsbereich unmittelbar benachbart zu dem Anschlussabschnitt der automatischen Schmiereinrichtung angeordnet ist. In diesem Fall kann der Austausch der leeren Schmiermittelkartusche gegen eine aus dem Vorratsbereich entnommene volle Schmiermittelkartusche sehr schnell vonstattengehen.

Besonders vorteilhaft ist es ferner, wenn der Vorratsbereich eine Halterung für eine Mehrzahl von Schmiermittelkartuschen umfasst. Hierdurch wird es ermöglicht, dass über eine vergleichsweise lange Betriebszeit des Anbaugeräts Schmiermittelkartuschen unmittelbar am Anbaugerät zur Verfügung stehen, wodurch sich die oben genannten grundsätzlichen Vorteile multiplizieren. Soll der Vorratsbereich neu befüllt werden, kann auch dies besonders effizient durch ein gleichzeitiges Befüllen des Vorratsbereichs mit einer Mehrzahl von Schmiermittelkartuschen erfolgen.
Vorgeschlagen wird auch, dass die Halterung einen Aufnahmeblock mit mindestens einer Aufnahmeeinrichtung für einen Anschlussstutzen einer Schmiermittelkartusche aufweist. Somit kann die Schmiermittelkartusche auf die gleiche Art und Weise an dem Vorratsbereich gehalten werden, wie sie im Einsatz auch an der dem Anschlussabschnitt der Schmiermitteleinrichtung gehalten werden wird. Hierdurch wird der Betrieb nochmals vereinfacht. Beispielsweise können Anschlussstutzen und Aufnahmeeinrichtung jeweils ein komplementär das Gewinde aufweisen.

Eine weitere vorteilhafte Weiterbildung zeichnet sich dadurch aus, dass die Halterung mindestens zwei voneinander beabstandete und sich wenigstens im Wesentlichen orthogonal zu einer Längsachse der Schmiermittelkartuschen erstreckende Haltebleche umfasst, die mit fluchtenden Aussparungen versehen sind, in denen die Schmiermittelkartuschen aufgenommen sind. Ein solcher Vorratsbereich ist konstruktiv sehr einfach und daher preiswert.

Eine weitere vorteilhafte Weiterbildung zeichnet sich dadurch aus, dass der Vorratsbereich eine Sicherungseinrichtung umfasst, welche die Schmiermittelkartusche in dem Vorratsbereich sichert. Auf diese Weise wird verhindert, dass eine in dem Vorratsbereich vorhandene Schmiermittelkartusche im Betrieb des Anbaugeräts aus dem Vorratsbereich herausfällt und beispielsweise beschädigt wird oder sogar verloren geht und auf diese Weise für einen späteren Austausch nicht mehr zur Verfügung steht. Der Betrieb des Anbaugeräts wird auf diese Weise sicherer gemacht.

In konkreter Weiterbildung hierzu wird vorgeschlagen, dass die Sicherungseinrichtung ein Sicherungsblech umfasst, welches auf einer Entnahmeseite des Vorratsbereichs lösbar angeordnet ist. Dies ist konstruktiv wiederum besonders einfach und daher preiswert.

Vorgeschlagen wird auch, dass der Arbeitsabschnitt mindestens zwei Zerkleinerungswalzen zum Zerkleinern eines Materials aufweist, wobei die Zerkleinerungswalzen mittels Lagereinrichtungen an einem Gehäuse des Anbaugeräts gelagert sind, und wobei die automatische Schmiereinrichtung zum Schmieren der Lagereinrichtungen ausgebildet ist. Gerade bei einem Anbaugerät mit solchen Zerkleinerungswalzen ist die Belastung der Lagereinrichtungen besonders hoch, und daher ist auch der Verbrauch an Schmiermittel besonders hoch. Bei einem solchen Anbaugerät sind die oben genannten Vorteile daher besonders prägnant.

Eine weitere vorteilhafte Ausgestaltung der Erfindung zeichnet sich dadurch aus, dass der Vorratsbereich ein nachträglich an das Anbaugerät hinzugefügter Vorratsbereich ist. Somit können die erfindungsgemäßen Vorteile auch an solchen Anbaugeräten erzielt werden, welche bisher keinen Vorratsbereich haben.

Eine weitere vorteilhafte Ausgestaltung der Erfindung zeichnet sich dadurch aus, dass die Schmiermittelkartusche ein Gehäuse umfasst, welches eine Anzeigeeinrichtung für einen Schmiermittelfüllstand aufweist. Auf diese Weise kann ein Benutzer auf sehr einfache Art und Weise und vorzugsweise auch aus einer gewissen Entfernung erkennen, wann eine an dem Anschluss der automatischen Schmiereinrichtung angeschlossene Schmiermittelkartusche leer ist und gegen eine in dem Vorratsbereich bevorratete volle Schmiermittelkartusche ausgetauscht werden muss.

Nachfolgend wird eine Ausführungsform der Erfindung unter Bezugnahme auf die beigefügte Zeichnung erläutert. In der Zeichnung zeigen:
- Figur 1: eine schematische Seitenansicht eines Anbaugeräts in Form eines Schaufelseparators mit einem Kupplungsabschnitt, einem Arbeitsabschnitt, einer automatischen Schmiereinrichtung, einer Schmiermittelkartusche und einer ersten Ausführungsform eines Vorratsbereichs für mindestens eine Schmiermittelkartusche;
- Figur 2: eine perspektivische detaillierte Darstellung des Anbaugeräts von Figur 1;
- Figur 3: eine Darstellung ähnlich zu Figur 2, jedoch ohne den Kupplungsabschnitt und mit freier Sicht auf den Vorratsbereich;
- Figur 4: einen vergrößerten Ausschnitt von Figur 3;
- Figur 5: eine Halterung für eine Mehrzahl von Schmiermittelkartuschen des Vorratsbereichs der vorhergehenden Figuren;
- Figur 6: einen vergrößerten Ausschnitt ähnlich zu Figur 4, wobei der Vorratsbereich zum Teil abgedeckt ist;
- Figur 7: eine Darstellung ähnlich zu Figur 6, wobei ein Sicherungsblech des Vorratsbereichs entfernt ist;
- Figur 8: eine Darstellung ähnlich zu Figur 7, wobei eine Schmiermittelkartusche entfernt und eine andere zum Teil aus dem Vorratsbereich herausgezogen ist;
- Figur 9: eine perspektivische Darstellung einer Halterung einer zweiten Ausführungsform eines Vorratsbereichs;
- Figur 10: eine Draufsicht auf den Vorratsbereich von Figur 9;
- Figur 11: eine Schnittansicht längs der Linie XI-XI von Figur 10;
- Figur 12: eine perspektivische und teilweise geschnittene Ansicht ähnlich zu Figur 9;
- Figur 13: eine perspektivische Darstellung der Halterung der zweiten Ausführungsform des Vorratsbereichs in einem ersten Betriebszustand;
- Figur 14: eine Darstellung ähnlich zu Figur 13, jedoch in einem zweiten Betriebszustand; und
- Figur 15: eine Darstellung ähnlich zu Figur 13, jedoch in einem dritten Betriebszustand.

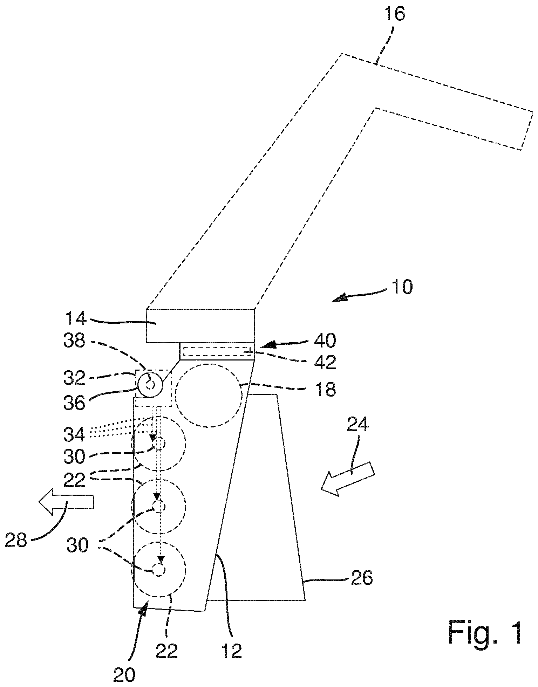

Ein im Tiefbau zu verwendendes Anbaugerät trägt in den Figuren insgesamt das Bezugszeichen 10. Vorliegend handelt es sich bei dem Anbaugerät 10 beispielhaft um einen Schaufelseparator. Das Anbaugerät 10 umfasst ein Gehäuse 12. An seinem in Figur 1 oberen Ende weist das Gehäuse 12 einen Kupplungsabschnitt 14 auf, mit dem das Anbaugerät 10 an einen lediglich in Figur 1 und auch dort nur durch gestrichelte Linien schematisch angedeuteten Baggerarm 16 eines weiter nicht gezeichneten Baggers angekuppelt werden kann. Der Kupplungsabschnitt 14 kann beispielsweise als ein hydraulischer Schnellwechsler ausgebildet sein, wie er dem Fachmann vom Markt her bei Anbaugeräten von Baumaschinen bekannt ist.

Das Anbaugeräts 10 umfasst vorliegend beispielhaft einen hydraulischen Antrieb 18, der lediglich symbolhaft durch einen gestrichelten Kreis angedeutet ist. Tatsächlich kann es sich bei dem Antrieb 18 um einen hydraulischen Motor handeln, der eine im Betrieb drehende Ausgangswelle aufweist. Der Antrieb 18 dient zum Antrieb eines insgesamt mit 20 bezeichneten Arbeitsabschnitts des Anbaugeräts 10. Bei dem vorliegend beispielhaft als Schaufelseparator ausgebildeten Anbaugerät 10 umfasst der Arbeitsabschnitt 20 insgesamt drei parallel zueinander angeordnete Zerkleinerungswalzen 22. Diese sind auf ihren Mantelflächen mit zahnartigen Vorsprüngen versehen, welche bei einer Drehung der Zerkleinerungswalzen 22 mit den Vorsprüngen der jeweils benachbarten Zerkleinerungswalze 22 kämmen. Die zahnartigen Vorsprünge sind in Figur 1 jedoch nicht gezeigt.

Im Betrieb des Anbaugeräts 10 dienen die Zerkleinerungswalzen 22 zum Zerkleinern eines Materials. Dieses gelangt im Betrieb des Anbaugeräts 10 entsprechend einem Pfeil 24 über einen Schaufelabschnitt 26 des Gehäuses zu den bzw. zwischen die Zerkleinerungswalzen 22, und es tritt dann als zerkleinertes Material entsprechend einem Pfeil 28 aus dem Anbaugerät 10 wieder aus. Die Zerkleinerungswalzen 22 sind an dem Gehäuse 12 mittels Lagereinrichtungen 30 gelagert.

Teil des Anbaugeräts 10 ist ferner eine automatische Schmiereinrichtung 32. Diese automatische Schmiereinrichtung 32 dient zum automatischen Schmieren der bewegten Komponenten des Antriebs und/oder des Arbeitsabschnitt, beispielsweise der Lagereinrichtungen 30. Die automatische Schmiereinrichtung 32 ist insgesamt in Figur 1 schematisch durch einen strichpunktiert gezeichneten Kasten angedeutet. Die Verbindung zu den Lagereinrichtungen 30 ist durch gepunktet gezeichnete Pfeile 34 angedeutet. Die automatische Schmiereinrichtung 32 weist einen Anschlussabschnitt 36 für eine insgesamt im Wesentlichen zylindrische Schmiermittelkartusche 38 auf. Ferner weist die automatische Schmiereinrichtung 32 eine nicht gezeichnete Fördereinrichtung, beispielsweise eine Pumpe auf, mit der das Schmiermittel aus der am Anschlussabschnitt 36 angeschlossenen Schmiermittelkartusche 38 entsprechend der Pfeile 34 zu den Lagereinrichtungen 30 gefördert wird.

Als Schmiermittel wird vorliegend von der automatischen Schmiereinrichtung 32 beispielhaft Fett verwendet, ein solches ist also auch in der Schmiermittelkartusche 38 vorhanden. Die Schmiermittelkartusche 38 kann an den Anschlussabschnitt 36 lösbar mit der Schmiereinrichtung 32 verbunden werden. Beispielsweise kann der Anschlussabschnitt 36 einen Bajonett-Anschluss, einen Schraubanschluss oder Ähnliches umfassen.

Unmittelbar benachbart zu dem Anschlussabschnitt 36 und auch unmittelbar benachbart zu dem Kupplungsabschnitt 14 weist das Anbaugerät 10 einen Vorratsbereich 40 auf. In diesem ist mindestens eine Schmiermittelkartusche 42 ("Ersatz-Schmiermittelkartusche") bevorratet. Wie weiter unten noch dargelegt werden wird, können in dem hier konkret beschriebenen Vorratsbereich 40 insgesamt bis zu vier Ersatz-Schmiermittelkartuschen 42 bevorratet werden. Wie aus Figur 1 ersichtlich ist, ist also der Vorratsbereich 40 unmittelbar unterhalb von dem Kupplungsabschnitt 14 und schräg oberhalb von dem Anschlussabschnitt 36 angeordnet.

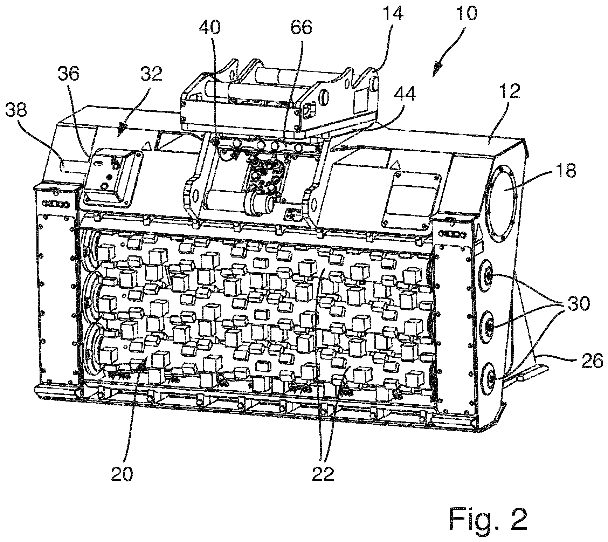

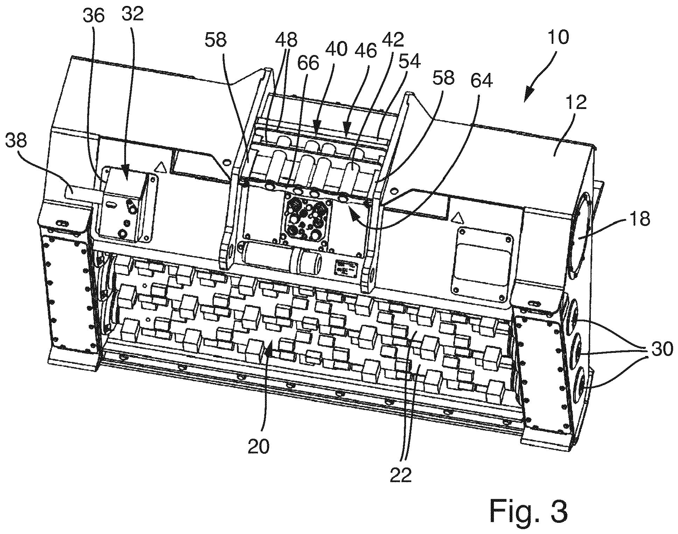

Nun wird auf die detaillierteren Darstellungen in den Figuren 2-5 Bezug genommen. Insbesondere aus Figur 2 ist ersichtlich, dass bei dem dort konkret dargestellten Anbaugerät 10 der Kupplungsabschnitt 14 als ein Schnellwechsler ausgebildet ist. Dieser ist an eine Verbindungsplatte 44 anmontiert, welche den Vorratsbereich 40 nach oben hin abschließt. Dies ist aus Figur 3 ersichtlich, wo das Anbaugerät 10 ohne diese Verbindungsplatte 44 dargestellt ist, so dass man unmittelbar in den Vorratsbereich 40 hinein blicken kann.

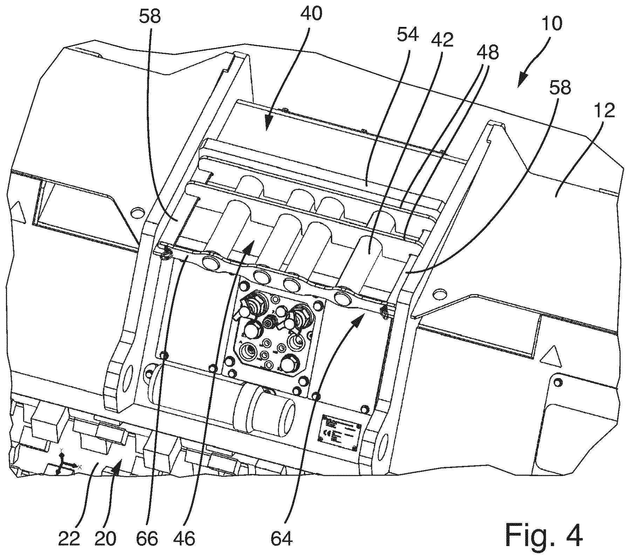

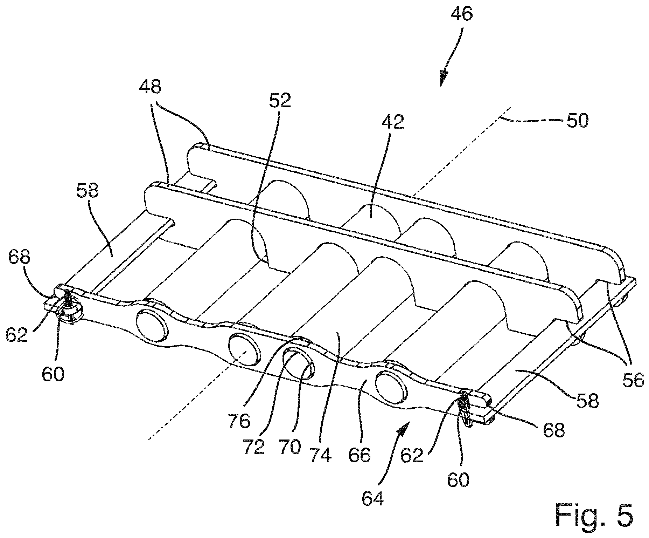

Aus der Darstellung der Figur 3 sowie insbesondere aus den Darstellungen der Figuren 4 und 5 ist ersichtlich, dass der Vorratsbereich 40 eine Halterung 46 für insgesamt vier Ersatz-Schmiermittelkartuschen 42 umfasst. Dabei umfasst diese Halterung 46 wiederum vorliegend beispielhaft zwei Haltebleche 48, welche identisch zueinander ausgebildet sind, und die sich vorliegend orthogonal zu einer Längsachse 50 der Ersatz-Schmiermittelkartuschen 42 erstrecken. Die Haltebleche 48 sind identisch ausgebildet und weisen jeweils vier zu ihrer Unterseite hin offene und am Grund in etwa halbkreisförmige sowie insgesamt längliche Aussparungen 52 auf, von denen aus Gründen der Übersichtlichkeit in Figur 5 jedoch nur eine mit einem Bezugszeichen versehen ist. Die Aussparungen 52 dienen zur Aufnahme der vorliegend beispielhaft insgesamt zylindrischen Ersatz-Schmiermittelkartuschen 42, wie beispielsweise aus Figur 5 ersichtlich ist.

Wie aus Figur 4 ersichtlich ist, ist die Halterung 46 in einer Gehäuseaussparung unterhalb von der Verbindungsplatte 44 aufgenommen. Dabei liegt das in den Figuren hintere Halteblech 48 in einem kurzen Abstand und parallel zu einer Abschlussplatte 54. An ihren seitlichen Enden weisen die Haltebleche 48 schlitzförmige und sich Längsrichtung der Haltebleche 48 erstreckende Ausnehmungen 56 auf, die in seitliche Stützbleche 58 eingreifen. Im Bereich der schlitzförmigen Ausnehmungen 56 können die Haltebleche 48 mit den Stützflächen 58 starr verbunden sein, beispielsweise verschweißt sein.

Am in den Figuren vorderen, also von außen zugänglichen Ende des Vorratsbereichs 40 ist in jedes der beiden Stützbleche 58 ein Loch 60 eingebracht, in welches ein Sicherungssplint 62 eingesteckt werden kann. Die beiden Sicherungssplinte 62 gehören insgesamt zu einer Sicherungseinrichtung 64, mit der die Ersatz-Schmiermittelkartuschen 42 in dem Vorratsbereich 40 gegen ein Herausfallen gesichert werden können. Zu dieser Sicherungseinrichtung 64 gehört auch ein Sicherungsblech 66, welches ebenfalls zwei seitliche und sich in Längsrichtung des Sicherungsblechs 66 erstreckende schlitzförmige Ausnehmungen 68 aufweist, welche in der beispielsweise in Figur 5 gezeichneten Einbaulage ebenfalls in die seitlichen Stützbleche 58 eingreifen. Die zu den schlitzförmigen Ausnehmungen 68 benachbarten Bereiche des Sicherungsblechs 66 liegen dabei in der gezeichneten Einbaulage von außen bzw. vorne gesehen hinter den Sicherungssplinten 62.

Das Sicherungsblech 66 weist vier kreisförmige Aussparungen 70 auf, die mit den Aussparungen 52 der Haltebleche 48 fluchten, und in denen in der beispielsweise in Figur 5 gezeichneten Betriebslage zylindrische Endabschnitte 72 der Ersatz-Schmiermittelkartuschen 42 aufgenommen sind. Diese Endabschnitte 72 haben einen kleineren Durchmesser als ein restlicher zylindrischer Abschnitt 74 der Ersatz-Schmiermittelkartuschen 42, wodurch ein Absatz 76 gebildet wird. Die Durchmesser der Aussparungen 70 sind so gewählt, dass die zu den Aussparungen 70 unmittelbar benachbarten Bereiche des Sicherungsblechs 66 an den Absätzen der jeweiligen Ersatz-Schmiermittelkartusche 42 anliegen. Auf diese Weise werden die Ersatz-Schmiermittelkartuschen 42 in deren axialer Richtung (Längsachse 50) in dem Vorratsbereich 40 gesichert, sie können also nicht aus dem Vorratsbereich 40 herausfallen.

Bei dem Endabschnitt 72 kann es sich um einen Verschlussdeckel handeln, mit dem ein Verbindungsstutzen einer Ersatz-Schmiermittelkartusche 42 zum Anschlussabschnitt 36 der Schmiereinrichtung 32 hin verschlossen wird, solange die Ersatz-Schmiermittelkartusche 42 im Vorratsbereich 40 gehalten ist. Je nach Ausführung des Anschlussabschnitts 36 der Schmiereinrichtung 32 kann der Verbindungsstutzen einen Bajonettverschluss oder ein Außengewinde für eine Schraubverbindung mit dem Anschlussabschnitt 36 oder irgend eine andere Einrichtung für eine sichere Verbindung zwischen der Ersatz-Schmiermittelkartusche 42 und dem Anschlussabschnitt 36 aufweisen.

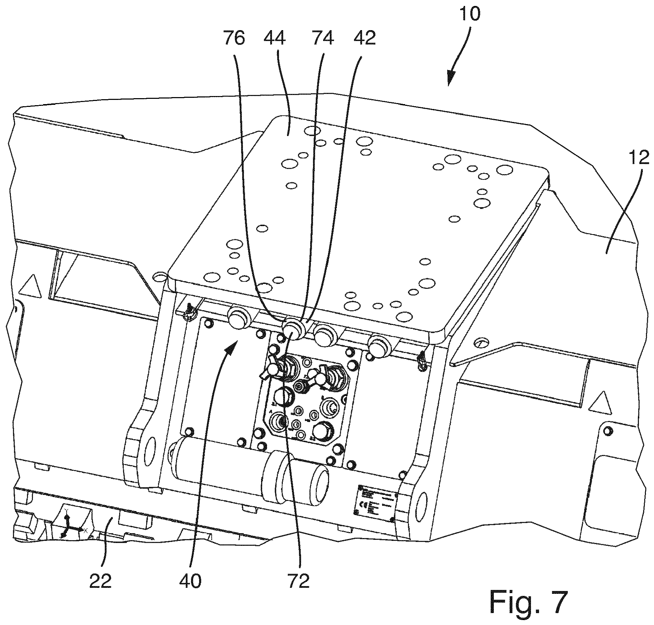

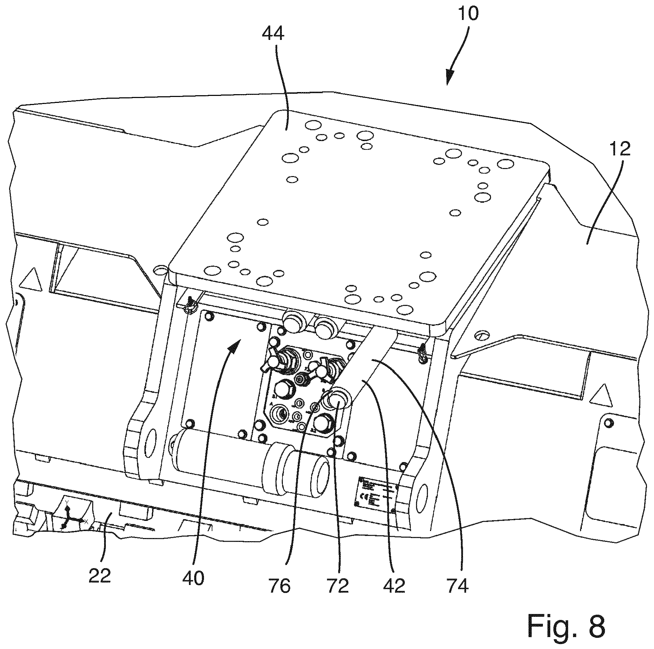

Soll eine Ersatz-Schmiermittelkartusche 42 aus dem Vorratsbereich 40 entnommen werden, wird zunächst einer der beiden Sicherungssplinte 62, oder werden beide Sicherungssplinte 62 entfernt. Dann kann das Sicherungsblech 66 von einem Benutzer abgenommen werden, was in Figur 7 gezeichnet ist. Nun kann der Benutzer eine Ersatz-Schmiermittelkartusche 42 längs zu der Längsachse 50 herausziehen und diese so aus dem Vorratsbereich 40 entnehmen. In Figur 8 ist ein Zustand dargestellt, in dem die äußerste linke der vier Ersatz-Schmiermittelkartuschen 42 bereits entnommen ist, und in dem die äußerste rechte der vier Ersatz-Schmiermittelkartuschen 42 teilweise aus dem Vorratsbereich 40 herausgezogen ist.

In der Zeichnung nicht dargestellt, aber vorhanden ist sowohl bei der Schmiermittelkartusche 38 als auch bei den Ersatz-Schmiermittelkartuschen 42, die insoweit vollkommen identisch sind, eine Anzeigeeinrichtung, welche es dem Benutzer des Anbaugeräts 10 ermöglicht, einen Füllstand bzw. eine Notwendigkeit eines Austauschs der am Anschlussabschnitt 36 befestigten Schmiermittelkartusche 38 zu erkennen. Vorzugsweise ist die Anzeigeeinrichtung so ausgebildet, dass dieses Erkennen aus einer gewissen Entfernung möglich ist, beispielsweise vom Führerstand eines Baggers oder einer anderen Baumaschine, an die das Anbaugerät 10 angekuppelt ist.

In einem sehr einfachen Fall kann die Anzeigeeinrichtung einfach aus einem Sichtfenster bestehen. Möglich ist aber auch, dass beispielsweise eine optische Anzeigeeinrichtung in Form eines Lichtsignals, beispielsweise durch eine LED, vorgesehen ist, welche dem Benutzer anzeigt, dass die Schmiermittelkartusche 38 leer ist. Auch eine akustische Anzeigeeinrichtung ist denkbar. Auch kann man sich vorstellen, dass der Füllstand und/oder die Notwendigkeit eines Wechsels der Schmiermittelkartusche 38 drahtlos zu einem Führerstand der Baumaschine übermittelt und dort zur Anzeige gebracht wird.

Bei einer nicht dargestellten und oben nicht beschriebenen Variante eines Anbaugeräts ist der Vorratsbereich nicht in das Gehäuse des Anbaugeräts integriert. Stattdessen ist der Vorratsbereich an einer geeigneten Stelle außen am Gehäuse des Anbaugeräts befestigt. Beispielsweise kommt als Vorratsbereich in einem solchen Falle ein Blechkasten in Frage, der an einer geeigneten Stelle auf das Gehäuse aufgeschraubt wird. Der Blechkasten verfügt dann vorteilhafterweise über eine Klappe, die geöffnet und geschlossen werden kann und die eine Sicherungseinrichtung im oben beschriebenen Sinne bildet, welche im Betrieb des Anbaugeräts ein Herausfallen der bevorratete Ersatz-Schmiermittelkartuschen aus dem Vorratsbereich verhindert. Durch den Blechkasten wird ferner eine Beschädigung der Ersatz-Schmiermittelkartuschen während des normalen Betriebs des Anbaugeräts verhindert.

In den Figuren wurde das Vorhandensein des Vorratsbereichs 40 im Zusammenhang mit einem als Schaufelseparator ausgebildeten Anbaugerät 10 erläutert. Es versteht sich jedoch, dass die Vorteile des Vorratsbereichs 10 auch bei ganz anderen Anbaugeräten erzielt werden können.

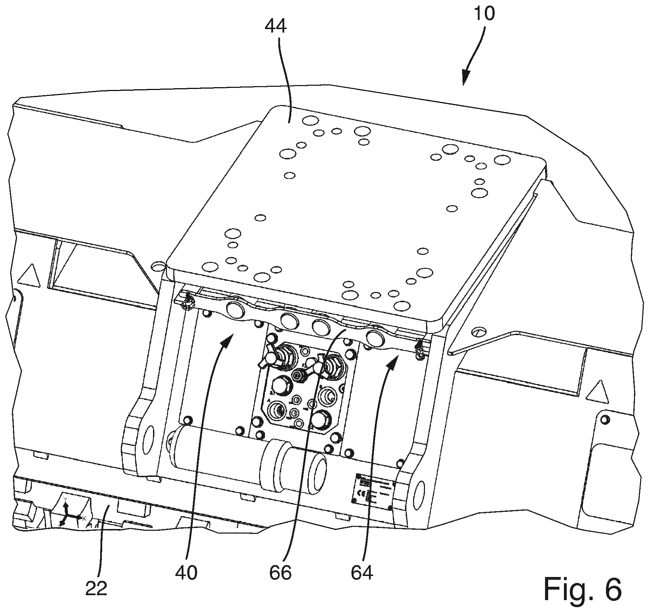

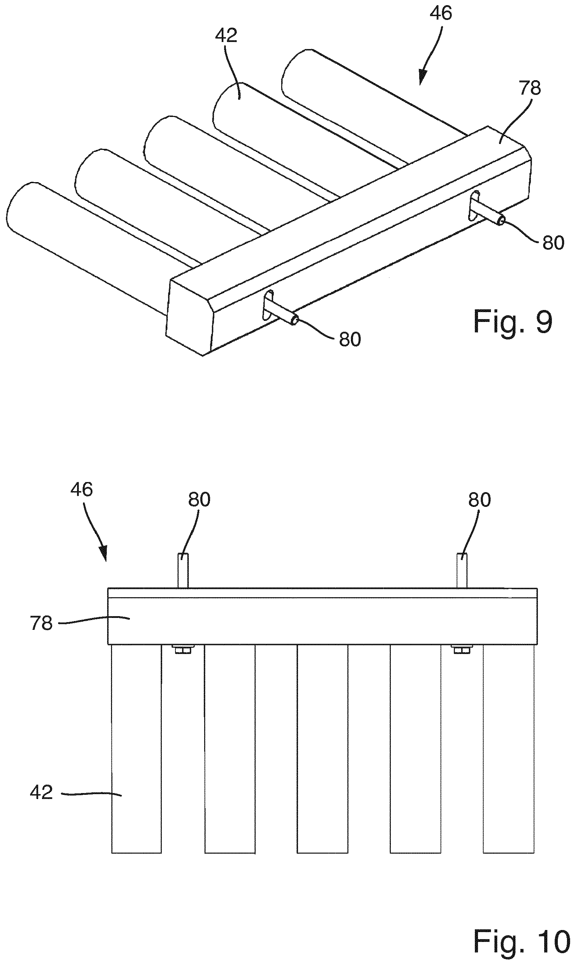

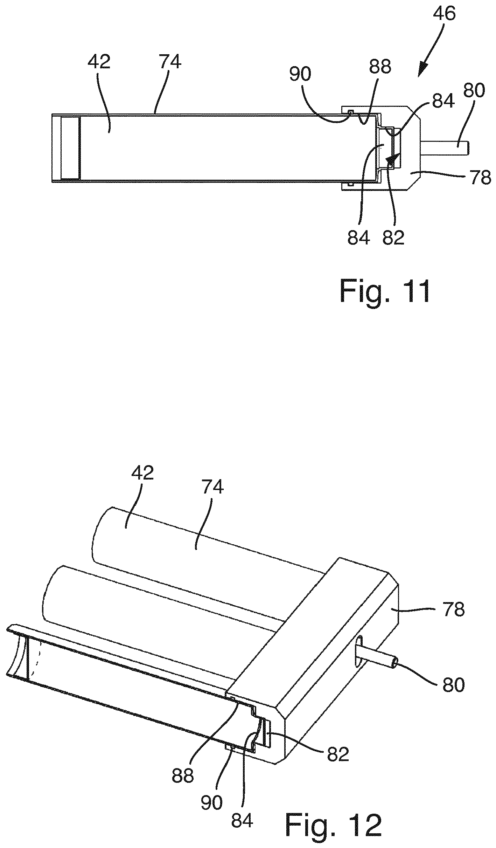

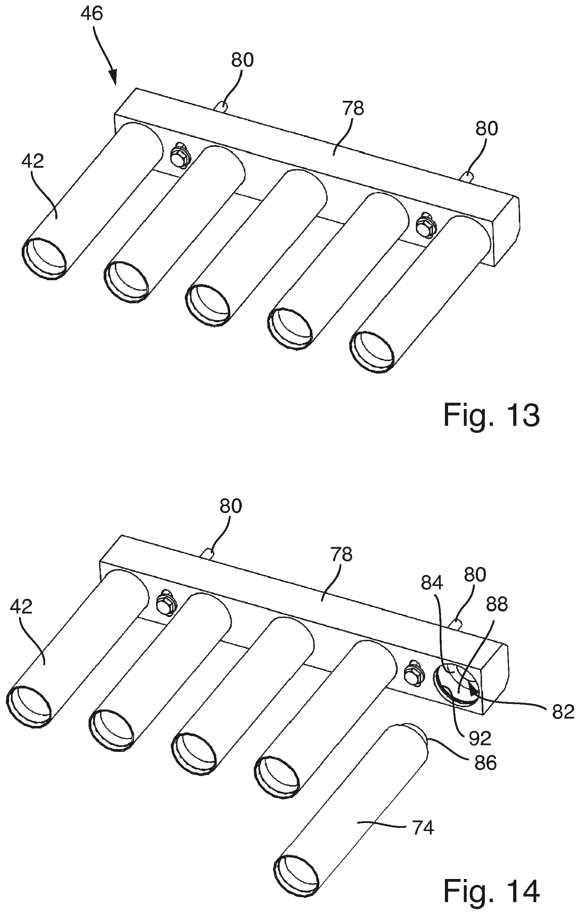

Nun wird unter Bezugnahme auf die Figuren 9-15 eine zweite Ausführungsform einer Halterung 46 eines Vorratsbereichs 40 erläutert. Dabei tragen solche Elemente und Bereiche, welche äquivalente Funktionen zu Elementen und Bereichen der ersten Ausführungsform der Figuren 1 bis 14 aufweisen, die gleichen Bezugszeichen. Sie werden nicht noch einmal im Detail erläutert.

Die Halterung 46 der zweiten Ausführungsform umfasst anstelle der Haltebleche einen massiven Aufnahmeblock 78, in den bei der vorliegenden Ausführungsform beispielhaft insgesamt fünf Ersatz-Schmiermittelkartuschen 42 eingeschraubt werden können. Der Aufnahmeblock 78 kann mittels zweier Schrauben 80 beispielsweise an der in den Figuren 3 und 4 im Zusammenhang mit der ersten Ausführungsform gezeigten Abschlussplatte 54 verschraubt werden. Dem Fachmann sind jedoch auch andere Arten von Befestigungen für den Aufnahmeblock 78 geläufig.

In dem Aufnahmeblock 78 ist an den jeweiligen Befestigungspositionen der Ersatz-Schmiermittelkartuschen 42 jeweils eine Aufnahmeeinrichtung vorliegend beispielhaft in Form einer abgestuften Sackbohrung 82 vorhanden, deren innerer Abschnitt 84 mit kleinerem Durchmesser mit einem Innengewinde (ohne Bezugszeichen) versehen ist. Dieser Abschnitt 84 und sein Gewinde passen zu einem Außengewinde auf einem Anschlussstutzen vorliegend beispielhaft in Form eines Schraubstutzen 86 der Ersatz-Schmiermittelkartusche 42. Dieser Schraubstutzen 86 hat einen geringeren Durchmesser als der restliche Abschnitt 74 der Ersatz-Schmiermittelkartusche 42.

Ein äußerer Abschnitt 88 der Sackbohrung 82 weist, mit einem gewissen Spiel, einen ähnlichen Durchmesser auf wie der restliche Abschnitt 74 der Ersatz-Schmiermittelkartuschen 42. Auf diese Weise dient dieser äußere Abschnitt 88 als ein Führungs- und Halteabschnitt für die Ersatz-Schmiermittelkartuschen 42, wenn diese mit dem jeweiligen Schraubstutzen 86 in das Innengewinde des Abschnitts 84 der jeweiligen Sackbohrung 82 eingeschraubt sind.

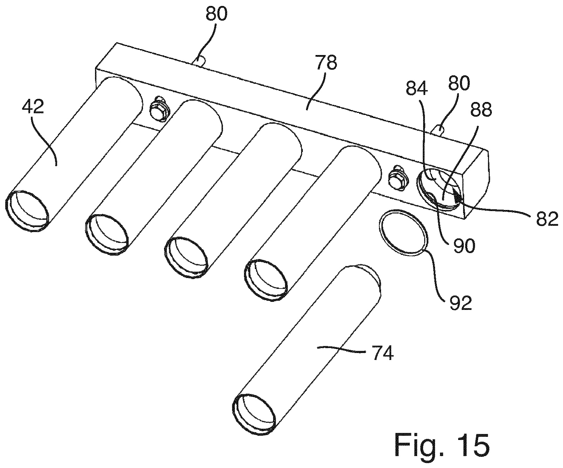

Um diese Führung und Halterung der Ersatz-Schmiermittelkartuschen 42 nochmals zu verbessern, weist der äußere Abschnitt 88 der Sackbohrung 82 an seinem zu einer Öffnung (ohne Bezugszeichen) der Sackbohrung 82 benachbarten Bereich eine umlaufende Nut 90 auf, in ein 0-Ring 92 (Figur 15) eingesetzt ist. Bei eingesetzter Ersatz-Schmiermittelkartusche 42 liegt dieser 0-Ring 92 elastisch an der Außenseite des restlichen Abschnitts 74 der Ersatz-Schmiermittelkartusche 42 an.

Diese zweite Ausführungsform einer Halterung 46 für Ersatz-Schmiermittelkartuschen 42 in dem Vorratsbereich 40 des Anbaugeräts 10 der Figuren 1-4 wird wie folgt verwendet: die Ersatz-Schmiermittelkartuschen 42 werden vom Hersteller mit einem Schraubverschluss (nicht gezeichnet) geliefert, der auf den Schraubstutzen 86 der Ersatz-Schmiermittelkartuschen 42 aufgeschraubt ist. Vor einer Benutzung des Anbaugeräts 10 wird der Vorratsbereich 40 vorzugsweise mit fünf vollen Ersatz-Schmiermittelkartuschen 42 gefüllt, indem von diesen der Schraubverschluss entfernt wird, und indem die Ersatz-Schmiermittelkartuschen 42 mit ihren Schraubstutzen 86 in die jeweiligen Sackbohrungen 82 eingeführt und dort in das Innengewinde des inneren Abschnitts 84 eingeschraubt werden.

Soll eine Ersatz-Schmiermittelkartusche 42 verwendet werden, kann diese vom Benutzer des Anbaugeräts 10 einfach aus dem Innengewinde des inneren Abschnitts 84 der Sackbohrung 82 ausgeschraubt und in den entsprechend konfigurierten Anschlussabschnitt 36 der Schmiereinrichtung 32 eingeschraubt werden. Die vom Anschlussabschnitt 36 der Schmiereinrichtung 32 ausgeschraubte leere Schmiermittelkartusche kann stattdessen in den frei gewordenen Platz am Aufnahmeblock 78 eingeschraubt werden. Auf diese Weise wird verhindert, dass leere Schmiermittelkartuschen achtlos weggeworfen werden und hierdurch die Umwelt verschmutzen.

Es versteht sich, dass bei der oben beschriebenen zweiten Ausführungsform anstelle der erwähnten Nut 90 und des 0-Rings 92 auch eine andere Einrichtung vorgesehen sein kann, um die Ersatz-Schmiermittelkartuschen 42 sicher in der Halterung 46 und somit im Vorratsbereich 40 zu halten und die Verbindung zwischen dem Schraubstutzen 86 und dem inneren Abschnitt 84 der Sackbohrung 82 zu entlasten.

## Patentansprüche

1. Anbaugerät (10) zum Ankuppeln an eine Baumaschine und zur Verwendung im Tiefbau, umfassend einen Antrieb (18), einen von dem Antrieb (18) antreibbaren Arbeitsabschnitt (20), und eine automatische Schmiereinrichtung (32) zum Schmieren des Antriebs (18) und/oder des Arbeitsabschnitts (20), wobei die automatische Schmiereinrichtung (32) einen Anschlussabschnitt (36) für den Anschluss einer Schmiermittelkartusche (38) umfasst, **dadurch gekennzeichnet, dass** das Anbaugerät (10) einen Vorratsbereich (40) aufweist, in dem mindestens eine Schmiermittelkartusche (42) bevorratbar ist.

2. Anbaugerät (10) nach Anspruch 1, **dadurch gekennzeichnet, dass** der Vorratsbereich (40) benachbart zu einem Kupplungsabschnitt (14) angeordnet ist, wobei der Kupplungsabschnitt (14) zum Ankuppeln des Anbaugeräts (10) an eine Baumaschine, insbesondere an einen Baggerarm (16) eines Baggers, ausgebildet ist.

3. Anbaugerät (10) nach wenigstens einem der vorhergehenden Ansprüche, **dadurch gekennzeichnet, dass** der Vorratsbereich (40) benachbart zu dem Anschlussabschnitt (36) der automatischen Schmiereinrichtung (32) angeordnet ist.

4. Anbaugerät (10) nach wenigstens einem der vorhergehenden Ansprüche, **dadurch gekennzeichnet, dass** der Vorratsbereich (40) eine Halterung (46) für eine Mehrzahl von Schmiermittelkartuschen (42) umfasst.

5. Anbaugerät (10) nach Anspruch 4, **dadurch gekennzeichnet, dass** die Halterung (46) mindestens zwei voneinander beabstandete und sich wenigstens im Wesentlichen orthogonal zu einer Längsachse (50) der Schmiermittelkartuschen (42) erstreckende Haltebleche (48) umfasst, die mit fluchtenden Aussparungen (52) versehen sind, in denen die Schmiermittelkartuschen (42) aufgenommen sind.

6. Anbaugerät (10) nach Anspruch 4, **dadurch gekennzeichnet, dass** die Halterung (46) einen Aufnahmeblock (78) mit mindestens einer Aufnahmeeinrichtung (82) für einen Anschlussstutzen (86) einer Schmiermittelkartusche (42) aufweist.

7. Anbaugerät (10) nach wenigstens einem der vorhergehenden Ansprüche, **dadurch gekennzeichnet, dass** der Vorratsbereich (40) eine Sicherungseinrichtung (64) umfasst, welche die Schmiermittelkartusche (42) in dem Vorratsbereich (40) sichert.

8. Anbaugerät (10) nach Anspruch 6, **dadurch gekennzeichnet, dass** die Sicherungseinrichtung (64) ein Sicherungsblech (66) umfasst, welches auf einer Entnahmeseite des Vorratsbereichs (40) lösbar angeordnet ist.

9. Anbaugerät (10) nach wenigstens einem der vorhergehenden Ansprüche, **dadurch gekennzeichnet, dass** der Arbeitsabschnitt (20) mindestens zwei Zerkleinerungswalzen (22) zum Zerkleinern eines Materials aufweist, wobei die Zerkleinerungswalzen (22) mittels Lagereinrichtungen (30) an einem Gehäuse (12) des Anbaugeräts (10) gelagert sind, und wobei die automatische Schmiereinrichtung (32) zum Schmieren der Lagereinrichtungen (30) ausgebildet ist.

10. Anbaugerät nach wenigstens einem der vorhergehenden Ansprüche, **dadurch gekennzeichnet, dass** der Vorratsbereich ein nachträglich an das Anbaugerät hinzugefügter Vorratsbereich ist.

11. Anbaugerät (10) nach wenigstens einem der vorhergehenden Ansprüche, **dadurch gekennzeichnet, dass** die Schmiermittelkartusche (38, 42) ein Gehäuse umfasst, welches eine Anzeigeeinrichtung für einen Schmiermittelfüllstand aufweist.
